# EUROPEAN PATENT APPLICATION

(11) **EP 3 136 373 A1**
(43) Date of publication of application: **01.03.2017**
(21) Application number: 15783585.1
(22) Date of filing: 20.04.2015
(51) Int. Cl.: G09F 3/10, G09F 3/02

(54) **EPOXY STICKER AND PREPARATION METHOD THEREFOR**

(30) Priority: 21.04.2014 KR 20140047383
(71) Applicant: Unidesign, Co., Ltd., Bucheon-si, Gyeonggi-do 420-857 (KR)
(72) Inventor: KIM, Hyong Jin, Bucheon-si Gyeonggi-do 420-760 (KR)
(74) Representative: Regimbeau
(86) International application number: PCT/KR2015/003915
(87) International publication number: WO 2015/163649

(57) **Abstract**

The present invention relates to an epoxy sticker, and a preparation method therefor and more specifically, to: an epoxy sticker facilitating large area production and having an excellent three-dimensional effect by first forming a print line along the shape of a print part and then carrying out epoxy printing on the inside of the print line; and a method for producing the epoxy sticker.

## Description

### Technical Field

The present invention relates to an epoxy sticker and a method for producing the same, and more particularly, to an epoxy sticker which is easily produced over a large area by forming a printed line along the shape of a printed portion, and then printing epoxy inside the printed line, and which has an excellent three-dimensional effect, and to a method for producing the epoxy sticker.

### Background Art

Conventional epoxy stickers are produced by applying an epoxy resin solution to the patterned surface of a printed film, which have sticker patterns printed thereon, by a manual operation, or screen-printing the epoxy resin solution on the patterned surface, followed by drying. However, in the case of the manual operation, there are problems in that the degree of protrusion of the produced stickers differs between the sticker patterns, and thus the uniformity of the product is low, and in that the production cost increases and it is difficult to produce the stickers in large amounts within a short time. In the case of the silk screening printing, there is a problem in that the epoxy ink flows and spreads into the printed region of the printed film to form a flat layer before drying, making it difficult to achieve a desired three-dimensional effect.

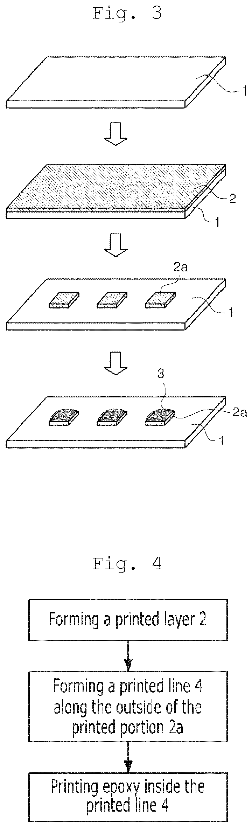

Fig. 3 shows a conventional process for making an epoxy sticker. As shown therein, a printed layer 2 including a printed portion 2a is formed on a printing base film 1 by offset printing or screening printing, and then a portion outside the printed portion 2a is cut off by Thomson or thermal cutting.

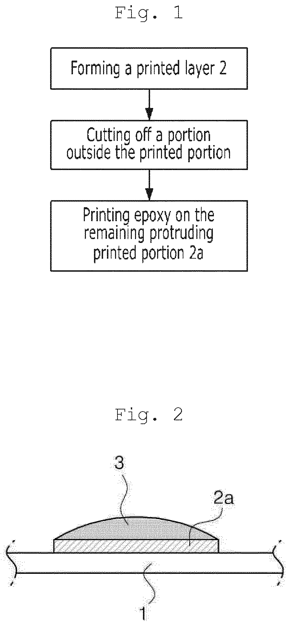

When epoxy ink is applied to the top of the protruding printed portions 2 remaining after this partial cutting, the epoxy ink will impart a three-dimensional effect to the printed portion 2a while it is cured. In this case, there is a problem in that, as shown in Fig. 2, a sufficient three-dimensional appearance is not achieved due to the spreadability of the epoxy ink. In addition, there are problems in that, because a portion outside the printed portion 2a is cut off, when the sticker is to be applied to a large area such as a wallpaper sheet, the sticker patterns should be attached one by one, and thus overall productivity decreases and production costs increase.

Accordingly, the present inventor has developed a method for producing an epoxy sticker, which can maximize the three-dimensional effect of epoxy ink and, at the same time, can be applied even to a large area with increased productivity at reduced production costs.

### Disclosure

### Technical Problem

The present invention has been made in order to solve the above-described problems, and it is an object of the present invention to provide a method for producing an epoxy sticker, which can maximize the three-dimensional effect of the sticker and, at the same time, enables the sticker to be efficiently applied even to a large area, and an epoxy sticker produced by the method.

Another object of the present invention is to provide a method for producing an epoxy sticker, in which a portion outside a printed portion is not cut off so that the epoxy sticker sheet itself can be attached even to a large area such as a wallpaper sheet, resulting in an increase in overall productivity and a decrease in production costs, and an epoxy sticker produced by the method.

### Technical Solution

To achieve the above objects, the present invention provides a method for producing an epoxy sticker, comprising the steps of: forming on a printing base film 1 a printed layer 2 including a printed portion 2a; forming a printed line 4 along the shape of the printed portion 2a; and printing epoxy inside the printed line 4 so as to form an epoxy protrusion 3 on the printed portion 2a.

Herein, in order for the epoxy protrusion to be formed inside the printed line 4 without crossing the printed line 4, the printed line 4 may preferably be formed of a silicone ink comprising 40-60 wt% of silicone and 40-60 wt% of an ink diluent, although it may also be formed of OPP ink that is generally used. The epoxy protrusion 3 is preferably formed of a water-soluble epoxy ink.

Furthermore, the printed line 4 may be formed to have a thickness of 0.5-1 mm or a height of 0.01-1 mm, and is preferably formed along the outside of the shape of the printed portion 2a, and the printing of the epoxy is preferably performed at a distance of 0.03-0.1 mm inward from the printed line 4.

In addition, the method may further comprise, before the step of forming the printed line 4 along the shape of the printed portion 2a, a step of forming a coating layer 5 on the printed layer 2 so that the epoxy ink may easily spread.

The present invention also provides an epoxy sticker produced by the above-described method, the epoxy sticker comprising: a printing base film 1; a printed layer 2 formed on the printing base film and including a printed portion 2a; a printed line 4 formed along the shape of the printed portion 2a; and an epoxy protrusion 3 printed inside the printed line 4. Herein, the printing base film may be made of any industrially available material such as paper, PET or the like. In an embodiment, if a UV printing process is used, the printing base film may be a PET film, one surface of which was antistatically treated.

Furthermore, the printed line 4 may be formed of a silicone ink comprising 40-60 wt% of silicone and 40-60 wt% of an ink diluent, although it may also be formed of OPP ink that is generally used. The epoxy protrusion 3 is preferably formed of a water-soluble epoxy ink.

Moreover, the printed line 4 may be formed to have a thickness of 0.5-1 mm or a height of 0.01-1 mm, and is preferably formed along the outside of the shape of the printed portion 2a.

In addition, the epoxy sticker may further comprise a coating layer 5 formed between the printed layer 2 and the epoxy protrusion 3.

### Advantageous Effects

According to the method for producing the epoxy sticker according to the present invention, the three-dimensional effect of epoxy ink can be maximized, and, at the same time, a portion outside the printed portion is not cut off so that the epoxy sticker sheet itself can be attached even to a large-area article such as a wallpaper sheet, resulting in an increase in overall productivity and a decrease in production costs.

### Description of Drawings

Fig. 1 is a block diagram showing a conventional process for producing an epoxy sticker.
Fig. 2 is a cross-sectional view of a conventional epoxy stocker.
Fig. 3 is a process diagram showing a process for producing a conventional epoxy sticker.
Fig. 4 is a block diagram showing a process for producing an epoxy sticker according to the present invention.
Figs. 5 and 6 are cross-sectional views of epoxy stickers according to embodiments of the present invention.
Fig. 7 is a process diagram showing a process for producing an epoxy sticker according to the present invention.
Fig. 8 is a perspective front view of an epoxy sticker according to another embodiment of the present invention.

### Description of reference numerals

1: printing base film; 2: printed layer;
2a: printed portion; 3: epoxy protrusion;
4: printed line; 5: coating layer.

### Best Mode

Hereinafter, preferred embodiments of an epoxy sticker according to the present invention and a method for producing the same will be described with reference to the accompanying drawings. The terms or words used in the specification and claims should not be limited to be construed as usual or dictionary definition but should be rather construed to be consistent with the technical spirits of the present invention.

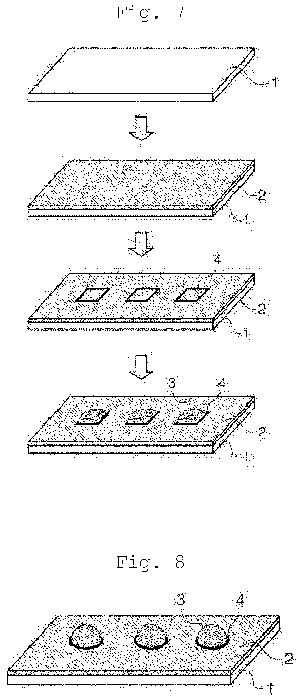

As can be seen in Fig. 7, a method for producing an epoxy sticker according to the present invention comprises the steps of: forming on a printing base film 1 a printed layer 2 including a printed portion 2a; forming a printed line 4 along the shape of the printed portion 2a; and printing epoxy inside the printed line 4 so as to form an epoxy protrusion 3 on the printed portion 2a. Herein, the printed portion 2a refers to a region of the printed layer 2, on which the epoxy protrusion is formed, and the printed portion 2a may generally be a region in which a certain picture or pattern is present.

The printing base film 1 may be made of any printable material such as paper, PET and the like. In an embodiment, when the printing base film 1 has a large area, it may be made of PET in order to reduce failure rate, and when a UV printing process is used, the printing base film 1 may be a PET film, one surface of which was antistatically treated. To one surface of the printing base film 1, an adhesive component may be applied so that the printing base film 1 can be attached to a surface such as a wall surface. If necessary, a release film for protecting the adhesive component may be separately attached.

On the printing base film 1, a printed layer 2 including various pictures, patterns or the like is formed. The printed layer 2 includes a printed portion 2a which needs to be treated with epoxy.

In a conventional general method, a printed layer 2 including a printed portion 2a on which an epoxy layer is to be formed is formed, after which a portion outside the printed portion 2a is cut off by Thomson cutting or the like, and epoxy ink is applied to the top of the protruding printed portion 2a remaining after the cutting to impart a three-dimensional effect to the printing portion 2a. However, this method has problems in that the three-dimensional effect is not sufficient and in that, because the portion outside the printed portion 2a is cut off, when the sticker is to be applied to a large area such as a wallpaper sheet, the sticker patterns should be attached one by one, resulting in a decrease in overall productivity and an increase in production costs.

The present invention has been made in order to solve such problems, and is characterized in that the portion outside the printed portion 2a is not cut off, and in that a printed line 4 serving as a barrier to prevent epoxy ink from spreading outward is formed along the shape of the printed portion 2a, and also epoxy is printed inside the printed line 4.

Namely, during epoxy printing, epoxy resin spreads to the surrounding area and meets the printed line 4 while it is located only inside the printed line 4 by interfacial tension without crossing the printed line 4, thereby naturally improving the three-dimension effect of the sticker.

Herein, the ink that is formed to form the printed line 4 may be any material capable of causing an interfacial tension with the epoxy resin, and for example, may be OPP ink that is generally used. In addition, in order to reduce failure rate, the printed line 4 may be formed of a silicone ink. In an embodiment, the silicone ink may comprise 40-60 wt% of silicone and 40-60 wt% of an ink diluent.

When the printed line 4 is formed of the silicone ink, no bubbles are formed in the printed line 4, and thus it is possible to prevent epoxy resin from spreading outside the printed line 4 with bursting of bubbles in the ink during thermal drying, and thus the failure rate in large-area printing can be reduced.

The ink diluent serves as a solvent to dissolve the silicone so as to have a suitable viscosity. As the ink solvent, cyclohexanone ink that is generally used, etc., may be used, and the specific composition thereof may be designed by any person skilled in the art so as to have a viscosity suitable for printing.

The silicone used is preferably is a transparent silicone so that the printed line 4 is not visible. Furthermore, the epoxy ink is preferably a water-soluble epoxy ink so that it has an interfacial tension with the printed line 4 formed of silicone.

Meanwhile, the printed line 4 may be formed by various methods, including silk screen printing. Although the printed line 4 may be formed to have various thicknesses and heights, it may be formed to have a thickness of 0.5-1 mm or a height of 0.01-1 mm.

Moreover, the printed line 4 is preferably formed along the outside of the shape of the printed portion 2a so that the printed line 4 is not visible after production of the sticker and so that the epoxy protrusion 3 may be formed throughout the printed portion 2a.

In addition, the epoxy printing is preferably performed at a distance of about 0.03-0.1 mm inward from the printed line 4 so that the epoxy ink surely reaches the printed line 4 and so that the epoxy ink can protrude throughout the printed portion 2a.

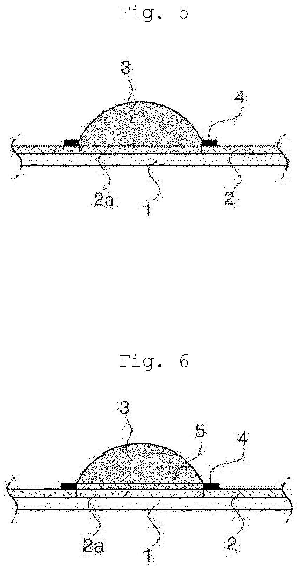

In addition, as shown in Fig. 6, the method of the present invention may further comprise, before the step of forming the printed line 4 along the shape of the printed portion 2a, a step of forming a coating layer 5 on the printed layer 2 so as to enable the epoxy ink to easily spread throughout the printed portion 2a.

The coating layer 5 is preferably made of a material such as PVC, PET or the like, on which the epoxy ink can easily spread. Furthermore, the coating layer 5 may be formed on a portion or the whole of the printed layer 2.

As shown in FIGS. 5 and 6, the epoxy sticker produced according to the method of the present invention as described above comprises: a printing base film 1; a printed layer 2 formed on the printing base film and including a printed portion 2a; a printed line 4 formed along the shape of the printed portion 2a; and an epoxy protrusion 3 printed inside the printed line 4.

Herein, the printed line 4 may be formed of a silicone ink comprising 40-60 wt% of silicone and 40-60 wt% of an ink diluent, although it may also be formed of OPP ink that is generally used. The epoxy protrusion 3 is preferably formed of a water-soluble epoxy ink.

The printed line 4 may have various shapes, without any particular limitation, depending on the shape of the printed portion 2a. For example, the shape of the printed line 4 may be a square shape (see Fig. 7), a circular shape (see Fig. 8), a polygonal shape, etc.

In addition, the epoxy sticker of the present invention may further comprise a coating layer 5 formed between the printed layer 2 and the epoxy protrusion 3 so as to enable the epoxy ink to easily spread on the printed portion 2a. The coating layer 5 may be formed on a portion or the whole of the printed layer 2.

The epoxy sticker produced according to the production method as described above may have a maximized three-dimensional effect, and may be efficiently applied even to a large area.

The present invention is not limited to the above-described embodiments and disclosure, and those skilled in the art will appreciate that various modifications are possible, without departing from the scope and spirit of the present invention as disclosed in the accompanying claims.

## Claims

1. A method for producing an epoxy sticker, comprising the steps of:
forming a printed layer 2 including a printed portion 2a on a printing base film 1;
forming a printed line 4 along a shape of the printed portion 2a; and
printing epoxy inside the printed line 4 so as to form an epoxy protrusion 3 on the printed portion 2a.

2. The method of claim 1, wherein the printed line 4 is formed of a silicone ink comprising 40-60 wt% of silicone and 40-60 wt% of an ink diluent, and
the epoxy protrusion is formed of epoxy ink.

3. The method of claim 1, wherein the printed line 4 is formed to have a thickness of 0.5-1 mm.

4. The method of claim 1, wherein the printed line 4 is formed to have a height of 0.01-1 mm.

5. The method of claim 1, wherein the printed line 4 is formed along an outside of the shape of the printed portion 2a.

6. The method of claim 1, wherein the printing of the epoxy is performed at a distance of 0.03-0.1 mm inward from the printed line 4.

7. The method of claim 1, further comprising, before the step of forming the printed line 4 along the shape of the printed portion 2a, a step of forming a coating layer 5 on the printed layer 2 so that the epoxy ink easily spreads.

8. An epoxy sticker, comprising:
a printing base film 1;
a printed layer 2 formed on the printing base film 1, and including a printed portion 2a;
a printed line 4 formed along a shape of the printed portion 2a; and
an epoxy protrusion 3 printed inside the printed line 4.

9. The epoxy sticker of claim 8, wherein the printed line 4 is formed of a silicone ink comprising 40-60 wt% of silicone and 40-60 wt% of an ink diluents, and
the epoxy protrusion is formed of epoxy ink.

10. The epoxy sticker of claim 8, wherein the printed line 4 has a thickness of 0.5-1 mm.

11. The epoxy sticker of claim 8, wherein the printed line 4 has a height of 0.01-1 mm.

12. The epoxy sticker of claim 8, wherein the printed line 4 is formed along an outside of the shape of the printed portion 2a.

13. The epoxy sticker of claim 8, further comprising a coating layer 5 formed on the printed layer 2.
